## Europäisches Patentamt

## European Patent Office

## Office européen des brevets

(11) Publication number: **0 123 796**
**B1**

# EUROPEAN PATENT SPECIFICATION

(45) Date of publication of patent specification: 22.07.87

(21) Application number: 84101138.0

(22) Date of filing: 04.02.84

(51) Int. Cl.⁴: **C 08 G 59/16,** C 09 D 3/58,
C 08 L 63/10

(54) **Method of producing epoxy esters.**

(30) Priority: 13.04.83 US 484508

(43) Date of publication of application:
07.11.84 Bulletin 84/45

(45) Publication of the grant of the patent:
22.07.87 Bulletin 87/30

(84) Designated Contracting States:
BE DE FR GB IT NL

(56) References cited:
US-A-2 909 497
US-A-3 553 119
US-A-3 954 688

(73) Proprietor: DeSOTO, INC.
1700 South Mt. Prospect Road
Des Plaines Illinois 60018 (US)

(72) Inventor: Sekmakas, Kazys
203 N. Flake Drive
Palatine, Ill., 60067 (US)
Inventor: Shah, Raj
1335 Concordia Lane
Schaumburg, Ill., 60172 (US)

(74) Representative: Reitzner, Bruno, Dr. et al
Patentanwälte Dipl.-Ing. R. Splanemann Dr. B.
Reitzner Tal 13
D-8000 München 2 (DE)

Courier Press, Leamington Spa, England.

## Description

This invention relates to a method of producing epoxy esters having reduced viscosity, especially those in which the ester group contains ethylenic unsaturation, and which are curable with aminoplast resins to produce water insensitive coatings; the invention also relates to thermosetting organic solvent solution coating compositions containing said epoxy esters.

Unsaturated epoxy esters are known compounds. In the customary production of these esters, such as described in US—A—35 53 119 and 2 909 497, the unsaturated fatty acid is added to a hot polyepoxide-containing solution which contains an alkaline esterification catalyst, or all the components are charged to a reactor and the mixture is heated to bring it to reaction temperature. The products produced in this fashion have exhibited a higher than desired solution viscosity which has undesirably limited the concentration of thermosetting solution coating compositions containing the same.

This invention is concerned with the production of epoxy esters having reduced solution viscosity and to low temperature-curing epoxy ester-aminoplast thermosetting solution coating compositions of high solids content.

In accordance with this invention, the solution viscosity of epoxy esters is reduced by slowly adding at least a 1% stoichiometric excess of polyepoxide solution in organic solvent to a mixture of fatty acid and esterification catalyst maintained at elevated reaction temperature under conditions appropriate for the reaction of 1,2-oxirane with carboxyl functionality, and maintaining reaction conditions until the acid number is less than 10, preferably less than 5. The stoichiometry is based on carboxyl and epoxy functionalities.

The resulting epoxy ester contains a small amount of residual unreacted epoxy functionality, but the amount thereof is too small to create solution instability in admixture with certain aminoplast resins so long as the stoichiometric excess is less than 20%, preferably less than 10%.

The polyepoxides which are esterified are constituted by at least about 60% of diglycidyl ether of a bisphenol having an average molecular weight by calculation of less than 500 and a 1,2-epoxy equivalency of from 1.8—2.0. These are preferably used in admixture with an epoxidized phenolic novolac having a 1,2-epoxy equivalency of from 2.5—5.5, preferably from 3.0—4.5. The epoxidized novolac desirably constituted from 5% to 40% of the mixture, preferably from 10% to 25%.

All proportions herein are by weight, unless otherwise stated.

The fatty acids which are employed may be saturated $C_6$—$C_{22}$ monocarboxylic acids, like palmitic acid, but unsaturated monocarboxylic acids, like tall oil fatty acid, are preferred, and will be illustrated herein. Other suitable acids are oleic acid, castor oil fatty acids and dehydrated castor oil fatty acids, linoleic acid and linseed fatty acids. The unsaturated acids aid adhesion and lower curing temperature, especially when drier salts are used, as is known.

By high solids is meant a total solids content of at least about 50%, preferably at least about 60%.

The solvents used in the coating compositions of this invention are the ones commonly used in epoxy ester-aminoplast coatings. Aromatic solvents, like xylol, alone or in admixture with alcohols, like butanol, are preferred. Ketones, like methyl amyl ketone, are desirably present.

While any organic solvent-soluble heat-hardening aminoplast resin may be used herein, hexamethoxymethyl melamine is characterized by high functionality, low temperature removal of the blocking methyl ester groups, and high solubility, and is hence preferred. Formaldehyde condensates with urea, benzoguanamine and bisphenol A, will further illustrate the useful aminoplast resin curing agents. High functionality (at least two N-methylol groups or an ether thereof per molecule) is preferred.

The aminoplast resin curing agents, are broadly useful in an amount of from 3% to 50%, preferably from 5% to 30% based on total resin solids.

The epoxy esters of reduced solution viscosity cure with aminoplast resins at relatively low temperature. In the presence of strong acid curing catalysts, like p-toluene sulfonic acid, one can obtain good cures at 120°C using baking times of from 10—30 minutes.

Driers may also be added when the fatty acids are unsaturated, but this is not essential. These driers are illustrated by cobalt naphthenate and are themselves well known.

## Example

760 g of tall oil fatty acids and 6 g of triethyl amine esterification catalyst are charged to a reactor equipped with a reflux condenser. The contents of the reactor are then heated to 80°C.

In a separate tank there is mixed together 530 g of a diglycidyl ether of bisphenol A having an average molecular weight of about 390 (the Shell product Epon 828® may be used), 100 g of an epoxidized phenolic novolac produced by reacting the phenolic novolac with epichlorohydrin and then dehydrohalogenating with sodium hydroxide. This product contains an average of about 3.6 phenol glycidyl ether groups per molecule, the phenol groups being connected to one another by a methylene bridge. Also present in this separate mixture is 120 g of methyl ethyl ketone and 80 g of xylol. This mixture is agitated until a uniform solution is formed.

The above solution is slowly added to the hot contents of the reactor over a 2-hour period, the temperature being maintained at 80°C. The 80°C temperature is then maintained for an additional hour and then heat is applied to increase the temperature to 90°C, which temperature is maintained until a specimen shows an acid value of less than 4.

The product has a solids content of 87.6%, a Gardner viscosity of Q—R and an acid value (measured on nonvolatile solids) of 2.3.

It is desired to point out that the reactants include a slight excess of 1,2-oxirane over carboxyl functionality (3.1 vs. 2.7) to insure the consumption of acidity. Residual acid yields water sensitive products, and the excess of oxirane functionality and the extensive reaction avoids this difficulty.

Hexamethoxymethyl melamine is then added to the above solution in an amount to provide 25% of the melamine content based on total resin solids. Addition of the melamine compound is at 100% solids and it dissolves in the solution by simple mixing at room temperature.

The coating composition containing the melamine curing agent is applied by spray on zinc phosphate-treated steel and polyester plastic in a thickness of 0.019—0.025 mm. Cure is then achieved by placing the wet-coated substrate in a 120°C .oven for 30 minutes. In each instance a water-insensitive cured coating is obtained. The cured coatings are of HB pencil hardness and are excellently adherent to each of the tested substrates.

## Claims

1. A method of producing epoxy esters having reduced solution viscosity and which are curable with aminoplast resins to produce water insensitive coatings comprising, slowly adding an organic solvent solution containing a 1% to 20% stoichiometric excess of polyepoxide at least about 60% of which is constituted by diglycidyl ethers of a bisphenol having an average molecular weight of less than 500 and a 1,2-epoxy equivalency of from 1.8—2.0, to a mixture of fatty acid and esterification catalyst maintained at elevated reaction temperature under conditions appropriate for the reaction of 1,2-oxirane with carboxyl, said fatty acids being $C_6$—$C_{22}$ monocarboxylic acids, and maintaining said reaction conditions until the acid number is less than 10.

2. A method as recited in claim 1 in which said stoichiometric excess of polyepoxide is less than 10% and said reaction conditions are maintained until the acid number is less than 5.

3. A method as recited in claim 1 in which said polyepoxide is a mixture including from 5% to 40% of the mixture of epoxidized phenolic novolac having a 1,2-epoxy equivalency of from 2.5—5.5.

4. A method as recited in claim 2 in which said polyepoxide is a mixture including from 10% to 25% of the mixture of epoxidized phenolic novolac having a 1,2-epoxy equivalency of from 3.0—4.5.

5. A method as recited in claim 1 in which said monocarboxylic acid is ethylenically unsaturated.

6. A method as recited in claim 4 in which said monocarboxylic acid is tall oil fatty acid.

7. A thermosetting organic solvent solution coating composition containing at least about 50% total solids content and comprising volatile organic solvent having dissolved therein the epoxy ester product made according to claim 1 and from 3% to 50% of total resin solids of an aminoplast resin curing agent.

8. A thermosetting organic solvent solution coating composition containing at least about 60% total solids content and comprising volatile organic solvent having dissolved therein the epoxy ester product made according to claim 6 and from 5% to 30% of total resin solids of hexamethoxymethyl melamine.

## Patentansprüche

1. Verfahren zur Herstellung von Epoxyestern mit verminderter Lösungsviskosität, die mit Aminoplastharzen zu wasserunempfindlichen Überzügen aushärtbar sind, dadurch gekennzeichnet, daß man eine organische Lösungsmittellösung, die 1 bis 20 % eines stöchiometrischen Überschusses an Polyepoxid enthält, von dem mindestens etwa 60 % aus Diglycidyläthern eines Bisphenols mit einem durchschnittlichen Molekulargewicht von weniger als 500 und einer 1,2-Epoxyäquivalenz von 1,8 bis 2,0 zusammengesetzt sind, langsam einem Fettsäure- und Veresterungskatalysator-Gemisch zusetzt, das bei einer erhöhten Reaktonstemperatur gehalten wird, und zwar unter Bedingungen, die für die Umsetzung von 1,2-Oxiran mit Carboxyl geeignet sind, wobei die Fettsäuren $C_6$—$C_{22}$-Monocarbonsäuren darstellen, und daß man die genannten Reaktionsbedingungen so lange aufrechterhält, bis die Säurezahl weniger als 10 beträgt.

2. Verfahren nach Anspruch 1, worin der stöchiometrische Überschuß an Polyepoxid weniger als 10 % beträgt und die genannten Reaktionsbedingungen aufrechterhalten werden, bis die Säurezahl weniger als 5 beträgt.

3. Verfahren nach Anspruch 1, worin das Polyepoxid ein Gemisch, enthaltend 5 bis 40 % epoxidierten phenolischen Novolak mit einer 1,2-Epoxyäquivalenz von 2,5 bis 5,5 darstellt.

4. Verfahren nach Anspruch 2, worin das Polyepoxid ein Gemisch, enthaltend 10 bis 25 % epoxidierten phenolischen Novolak mit einer 1,2-Epoxyäquivalenz von 3,0 bis 4,5, darstellt.

5. Verfahren nach Anspruch 1, worin die Monocarbonsäure äthylenisch ungesättigt ist.

6. Verfahren nach Anspruch 4, worin die Monocarbonsäure Tallölfettsäure darstellt.

7. Hitzehärtbare, in Form einer organischen Lösungsmittellösung vorliegende Überzugsmasse mit einem Gesamtfeststoffgehalt von mindestens etwa 50 %, enthaltend ein flüchtiges organisches Lösungsmittel, in dem das nach Anspruch 1 hergestellte Epoxyester-Produkt sowie 3 bis 50 %, bezogen auf die gesamten Harzfeststoffe, eines Aminoplastharz-Härtungsmittels gelöst sind.

8. Hitzehärtbare, in Form einer organischen Lösungsmittellösung vorliegende Überzugsmasse mit einem Gesamtfeststoffgehalt von mindestens etwa 60 %, enthaltend ein flüchtiges organisches Lösungsmittel, in welchem das nach Anspruch 6 hergestellte Epoxyester-Produkt und 5 bis 30 %, bezogen auf die gesamten Harzfeststoffe, Hexamethoxymethylmelamin, gelöst sind.

**Revendications**

1. Procédé de production d'époxy esters possédant une viscosité en solution réduite et qui sont durcissables au moyen de résines aminoplastes pour produire des enduits insensibles à l'eau, constituant à ajouter lentement une solution dans un solvant organique contenant un excès stoechiométrique de 1 % à 20 % de polyépoxyde, dont au moins 60 % est composé de diglycidyl-éthers d'un bisphenol ayant un poids moléculaire moyen de moins de 500 et une équivalence de 1,2-époxy de 1,8 à 2,0, à un mélange d'acide gras et de catalyseur d'estérification maintenu à une température de réaction élevée, dans les conditions appropriées pour la réaction de production de 1,2-oxyrane à fonction carboxyle, lesdits acides gras étant des acides monocarboxyliques en $C_6$ à $C_{22}$ et en maintenant lesdites conditions de réaction jusqu'à ce que l'indice d'acide soit de moins de 10.

2. Procédé selon la revendication 1, dans lequel ledit excès stoechiométrique de polyépoxyde est de moins de 10 % et lesdites conditions de réaction sont maintenues jusqu'à ce que l'indice d'acide soit de moins de 5.

3. Procédé selon la revendication 1, dans lequel ledit polyépoxyde est un mélange contenant de 5 % à 40 % du mélange de novolac phénolique époxydé ayant une équivalence de 1,2-époxy de 2,5 à 5,5.

4. Procédé selon la revendication 2, dans lequel ledit polyépoxyde est un mélange contenant de 10 % à 25 % du mélange de novolac phénolique époxydé ayant une équivalence de 1,2-époxy de 3,0 à 4,5.

5. Procédé selon la revendication 1, dans lequel l'acide monocarboxylique possède une insaturation éthylénique.

6. Procédé selon la revendication 4, dans lequel ledit acide monocarboxylique est une acide gras d'huile de grande taille.

7. Composition d'enduction thermocurdissable en solution dans un solvant organique contenant une teneur en solides totaux d'au moins 50 % et comprenant un solvant organique volatil dans lequel est dissous le produit époxy ester préparé selon la revendication 1 et un agent de durcissement résine aminoplaste représentant 3 % à 50 % des solides totaux de la résine.

8. Composition d'enduction thermodurcissable en solution dans un solvant organique, contenant une teneur en solides totaux d'au moins environ 60 % et comprenant un solvant organique volatil dans lequel est dissous le produit époxy ester préparé selon la revendication 6 et une quantité d'hexaméthoxyméthyle mélamine représentant 5 % à 30 % de solides totaux de la résine.